# EUROPÄISCHE PATENTANMELDUNG

(11) **EP 1 447 680 A1**
(43) Veröffentlichungstag der Anmeldung: **18.08.2004**
(21) Anmeldenummer: 04002618.9
(22) Anmeldetag: 06.02.2004
(51) Int. Cl.: G01S 13/86, G01S 13/93

(54) **Vorrichtung zur Erfassung von Objekten im Umfeld eines Kraftfahrzeugs mit Kamera- und Radarsensoren**

(30) Priorität: 13.02.2003 DE 10305935
(71) Anmelder: Valeo Schalter und Sensoren GmbH, 74321 Bietigheim-Bissingen (DE)
(72) Erfinder: Ziller, Thomas, 74354 Besigheim (DE); Fernandes, Ernani M., 74321 Bietigheim-Bissingen (DE)
(74) Vertreter: Dreiss, Fuhlendorf, Steimle & Becker

(57) **Zusammenfassung**

Es wird eine Vorrichtung zur Erfassung von Objekten im Umfeld eines Kraftfahrzeugs (1) vorgeschlagen mit mindestens einem Entfernungssensor (2, 3) zur Bestimmung von Entfernungen zwischen dem Kraftfahrzeug (1) und Objekten, wobei mindestens ein Kamerasensor (4) im Bereich des Entfernungssensors (2, 3) mit mindestens teilweise überlagertem Erfassungsbereich zu diesem letzteren vorgesehen ist sowie eine Signalverarbeitungseinheit (5), mittels welcher eine kombinierte Signal- und Bildverarbeitung des Entfernungssensors (2, 3) und des Kamerasensors (4) zur Objekterfassung und Entfernungsbestimmung realisierbar ist.

## Beschreibung

Die Erfindung betrifft eine Vorrichtung zur Erfassung von Objekten im Umfeld eines Kraftfahrzeugs mit mindestens einem Entfernungssensor zur Bestimmung von Entfernungen zwischen dem Kraftfahrzeug und von erfassten Objekten.

Derartige Vorrichtungen und Systeme sind im Automobilbereich für verschiedene Anwendungen bekannt, wie zum Beispiel Einparkhilfen, Totwinkelerkennung, Unfallvermeidungssysteme und dergleichen. Dabei ist regelmäßig eine Mehrzahl von Sensoren an der Peripherie des Fahrzeugs vorgesehen, mittels welchen ein bestimmter Bereich im Umfeld des Kraftfahrzeugs erfassbar ist. Beispielsweise ist bei sogenannten Einparkhilfen eine Mehrzahl von Entfernungssensoren jeweils im vorderen und im hinteren Stoßfänger untergebracht, um den Fahrer beim Einparken zu unterstützen, indem Warnsignale erzeugt werden, sofern das Fahrzeug unter einem gewissen Mindestabstand an angrenzende Fahrzeuge oder Gegenstände herangelangt. Derartige Entfernungssensoren für bekannte Einparkhilfe-Systeme können beispielsweise, auf der Basis von Ultraschall, Infrarot oder auch Radar funktionieren. Bei Einparkhilfe-Systemen auf der Basis von Ultraschallsensoren ist nachteilig, dass lediglich geringe Entfernungen vom Fahrzeug erfassbar sind, sodass erst im letzten Moment und somit nur bei sehr langsamem Herannahen an ein Objekt dieses auch durch das System erfasst werden kann. Bei bekannten Einparkhilfe-Systemen auf der Basis von Radarsensoren können zwar auch größere Entfernungen durch die Sensorik erfasst werden, wobei hier jedoch lediglich eine zweidimensionale Information ermittelbar ist, sodass zur genauen Entfernungsbestimmung eine Vielzahl von Radarsensoren erforderlich ist. Außerdem sind radarbasierte Sensoriken relativ kostenintensiv und benötigen konstruktionsbedingt einen erhöhten Platzbedarf.

Es sind darüber hinaus sogenannte kamerabasierte Überwachungssysteme im Automobilbereich bekannt, bei denen mittels aufwendiger Kameraeinrichtungen der Frontbereich eines Fahrzeugs überwacht und im Hinblick auf drohende Kollisionen ausgewertet wird. Derartige, lediglich kamerabasierte Systeme haben den Nachteil einer starken Anfälligkeit gegenüber Verschmutzung, schlechten Wetterbedingungen, schlechten Lichtverhältnissen etc. Des Weiteren sind diese kamerabasierten Überwachungssysteme in ihrer Kalibrierung aufgrund der erforderlichen Stereotechnik aufwendig.

Dem gegenüber ist es die Aufgabe der vorliegenden Erfindung, eine Vorrichtung zur Erfassung von Objekten im Umfeld eines Kraftfahrzeugs bereitzustellen, welche eine bessere Wirksamkeit in der Entfernungs- und Lagebestimmung von Hindernissen, insbesondere auch in größeren Entfernungen, ermöglicht, unanfällig gegenüber Störungseinflüssen ist und konstruktiv einfach und mit möglichst geringem Kostenaufwand zu realisieren ist.

Diese Aufgabe wird mit einer Vorrichtung zur Erfassung von Objekten im Umfeld eines Kraftfahrzeugs mit den Merkmalen des Anspruchs 1 gelöst. Vorteilhafte Ausgestaltungen und Weiterbildungen sind Gegenstand der abhängigen Ansprüche.

Die erfindungsgemäße Vorrichtung zur Erfassung von Objekten im Umfeld eines Kraftfahrzeugs weist mindestens einen Entfernungssensor zur Bestimmung von Entfernungen zwischen dem Kraftfahrzeug und Objekten auf sowie einen Kamerasensor im Bereich dieses Entfernungssensors mit mindestens teilweise überlagertem Erfassungsbereich zu dem Entfernungssensor. Weiter ist eine Signalverarbeitungseinheit vorgesehen, mittels welcher eine kombinierte Signal- und Bildverarbeitung des Entfernungssensors und des Kamerasensors zur Objekterfassung und Entfernungsbestimmung realisierbar ist. Durch Vorsehen eines Entfernungssensors und eines im Erfassungsbereich zu diesem überlagerten zusätzlichen Kamerasensors ist die Genauigkeit in der Erfassung von Objekten und ihren Entfernungen im nahen wie auch im entfernteren Umfeld des Kraftfahrzeugs erhöht. Die Kombination von mindestens teilweise überlagerten Messbereichen eines kamerabasierten Sensors und weiteren Entfernungssensoren ermöglicht zudem eine sichere Erfassung von Objekten und ihren Entfernungen auch bei schwierigen Sichtbedingungen, da die Erfassung durch teilweise redundante Sensordaten auch bei Ausfall oder schlechten Resultaten beispielsweise des kamerabasierten Sensors aufgrund einer Verschmutzung oder schlechter Wetterbedingungen weiter ermöglicht wird. Zudem kann mit der erfindungsgemäßen Vorrichtung ein größerer Bereich in der Erfassung von Objekten im Umfeld eines Kraftfahrzeugs abgedeckt werden. Es können beispielsweise auch größere Entfernungen, wie zum Beispiel bis zu 10 m vor oder hinter einem Kraftfahrzeug, einem Fahrer eingeblendet werden.

Die erfindungsgemäße Vorrichtung weist somit eine Sensorik auf, die nicht nur für das Unterstützen beim Einparken vorteilhaft einsetzbar ist, sondern ebenso zu einer Erfassung von weiter entfernten Objekten, beispielsweise im Rahmen eines Sicherheitssystems beim Fahren oder beim Überwachen eines Abstandes zu einem anderen Fahrzeug beim sogenannten Stop-and-go-Fahren. Einem Fahrer eines Kraftfahrzeugs kann mit der erfindungsgemäßen Vorrichtung auch eine Information hinsichtlich der Form bzw. Kontur eines erfassten Objektes gegeben werden, zum Beispiel in Form einer Darstellung auf einer Anzeigeeinrichtung mit einem Display. Die Informationsauswertemöglichkeiten sind größer als bei herkömmlichen Umfeld-Überwachungssystemen auf der Basis von Ultraschallsensoren oder dergleichen. Die Erfassungssicherheit ist aufgrund der mindestens teilweisen Redundanz von erfassten Daten durch die Entfernungssensoren und den Kamerasensor stabiler als bisher. Die Vorrichtung ist kostengünstig, da gegenüber rein entfernungssensorenbasierten Systemen weniger einzelne Sensoren am Fahrzeug erforderlich sind.

Nach einer vorteilhaften Ausgestaltung der Erfindung ist der mindestens eine Entfernungssensor ein Radarsensor. Das Vorsehen von radarbasierten Sensoren hat den Vorteil, dass der Raumbedarf der Sensorik reduziert ist und dass auch bei schlechten Sichtverhältnissen oder einer Verschmutzung die volle Funktionsfähigkeit der Vorrichtung weiterhin gewährleistet ist. Beispielsweise können aufgrund des Kamerasensors weniger radarbasierte Sensoren als bisher verwendet werden, zum Beispiel lediglich zwei Radarsensoren gegenüber bisherigen Systemen, die ein 3-Kanal-Radarsensor-System erforderten. Die Vorrichtung ist daher kostengünstiger und dennoch sicher in ihrer Funktionsstabilität.

Nach einer weiteren vorteilhaften Ausgestaltung der Erfindung ist der mindestens eine Kamerasensor eine passive, zweidimensionale Kamera. Die Kosten sind aufgrund dieses Typs von kamerabasiertem Sensor auf ein Mindestmaß beschränkt. Dennoch können zusätzliche objekt- oder hindernisrelevante Informationen mit der Vorrichtung detektiert werden, wie zum Beispiel die Objektkontur oder dgl.

Nach einer weiteren vorteilhaften Ausgestaltung der Erfindung sind zwei Entfernungssensoren und ein dazwischen mittig angeordneter Kamerasensor mit überlagertem Erfassungsbereich vorgesehen. Mit zwei beispielsweise radarbasierten Sensoren lässt sich so auf kostengünstige Weise und mit möglichst geringem Rechenaufwand in der Signalverarbeitung eine radarbezogene Entfernungsmessung durchführen, die erfindungsgemäß durch eine Kamerasensorik unterstützt bzw. ergänzt wird. Das Implementieren der Vorrichtung ist denkbar einfach, da nur eine geringe Anzahl von Sensoren in einem Seiten-, Vorder- oder Rückbereich eines Kraftfahrzeugs erforderlich ist. Nach einem diesbezüglichen Aspekt der vorliegenden Erfindung ist je eine Sensorik aus einer Kombination von Entfernungssensoren und Kamerasensoren im Frontbereich und am Heck eines Kraftfahrzeugs angeordnet. Ein solches System kann für mehrfache Funktionen eingesetzt werden, zum Beispiel als Einparkhilfe-Assistent ebenso wie als Abstandssicherheits-System bei einem Fahren z.B. auf der Autobahn.

Nach einer weiteren vorteilhaften Ausgestaltung der Erfindung ist eine Anzeigevorrichtung vorgesehen, mittels welcher Entfernungsinformationen und die Objektkonturen zweidimensional darstellbar sind. Einem Fahrer des Kraftfahrzeugs kann so eine optimale Information hinsichtlich eines erfassten Objektes bereitgestellt werden. Das Objekt kann zweidimensional anhand seiner Konturen dargestellt und vom Fahrer erkannt werden, und die Entfernungsinformation ist gleichermaßen verfügbar. Alternativ hierzu kann auch eine Anzeigevorrichtung vorgesehen sein, mittels welcher die Objektkonturen und Entfernungsinformationen dreidimensional darstellbar sind. Dies vermittelt dem Fahrer eine vollständige und realitätsnahe Situationswiedergabe, anhand derer der Fahrer in der Lage ist, Gefahrensituationen in jeder Lage und bei allen Sichtverhältnissen wirksam zu beurteilen und Unfälle zu vermeiden.

Nach einer weiteren vorteilhaften Ausgestaltung der Erfindung ist die Signalverarbeitungseinheit angepasst zur dreidimensionalen Bildverarbeitung und zu einer Redundanzüberprüfung von Sensorwerten des mindestens einen Entfernungssensors und Kamerasensors. Die Vorrichtung ist hierdurch in der Lage, bei doppelt vorliegenden Sensorinformationen diese auf ihre Erforderlichkeit hin abzuprüfen und entsprechende Signale sicher in jeder Lage auszugeben. Die Signalverarbeitungseinheit kann auch dreidimensional erfasste Bildinformationen, wie sie beispielsweise bei komplexeren Kamerasensoren erfasst werden, verarbeiten.

Nach einer weiteren vorteilhaften Ausgestaltung der Erfindung ist eine akustische und/oder grafische Warneinrichtung vorgesehen. Der Fahrer erhält beispielsweise bei Unterschreiten eines Mindestabstandes zu einem erfassten Objekt oder Hindernis eine einmalige oder auch je nach Gefahrensituation abgestufte Warninformation, beispielsweise durch eine bestimmte Folge oder Höhe von akustischen Signaltönen oder durch eine grafische Leuchtdiodenanzeige.

Weitere Vorteile und Merkmale der Erfindung sind der nachfolgenden Beschreibung zu entnehmen, in welcher die Erfindung anhand des in der beigefügten Zeichnung dargestellten Ausführungsbeispiels näher beschrieben und erläutert ist.

In der Zeichnung zeigen:
- Fig. 1: ein Blockdiagramm eines Ausführungsbeispiels einer Vorrichtung zur Erfassung von Objekten im Umfeld eines Kraftfahrzeugs gemäß der Erfindung; und
- Fig. 2: eine Rückansicht eines Kraftfahrzeugs mit einer Vorrichtung zur Erfassung von Objekten im Heckbereich gemäß einem Ausführungsbeispiel der vorliegenden Erfindung.

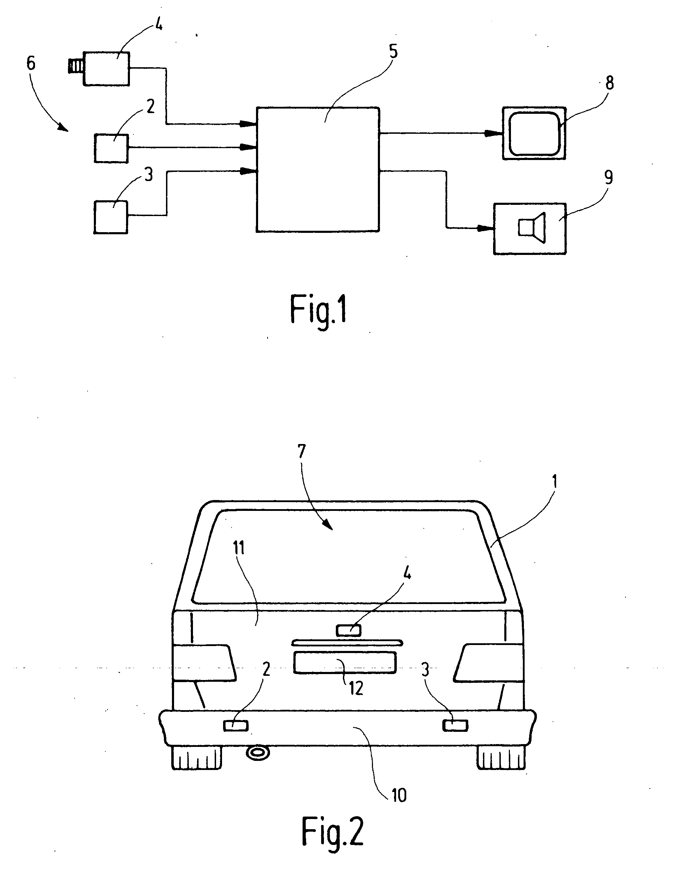

Das in Fig. 1 dargestellte Ausführungsbeispiel einer Vorrichtung zur Erfassung von Objekten im Umfeld eines Kraftfahrzeugs, welches hier vereinfacht in einem Blockdiagramm dargestellt ist, weist eine Sensorik 2, 3, 4 im Frontbereich 6 eines (nicht dargestellten) Kraftfahrzeugs auf. Die Sensorik bei diesem Ausführungsbeispiel besteht aus zwei radarbasierten Entfernungssensoren 2, 3 und einem Kamerasensor 4. Die Radarsensoren 2, 3 und der Kamerasensor 4 weisen einen überlagerten Messbereich zueinander auf, im vorliegenden Fall für den Frontbereich 6 eines Kraftfahrzeugs. Der Kamerasensor ist zum Beispiel eine zweidimensionale, passive Kamera für eine zweidimensionale Bilderfassung im Sensorbereich, die in einer Signalverarbeitungseinheit 5 ebenso ausgewertet werden kann wie auch die Abstandswerte der Radarsensoren 2, 3. Ein erfasstes Objekt kann somit hinsichtlich seines tatsächlichen Abstands auch in größeren Entfernungen von z.B. bis zu 10 m genauestens bewertet werden was mit bisherigen Ultraschallsensoriken nicht möglich ist. Außerdem kann die tatsächliche Form bzw. Außenkontur eines Objektes dem Fahrer zur Verfügung gestellt werden. Die Signalverarbeitungseinheit ist hierfür mit einer Anzeigevorrichtung 8 oder einem Display, z.B. in Form eines LCD-Bildschirms, im Innern des Fahrzeuges verbunden, mittels welchem eine Entfernung zu einem erfassten Objekt und/oder die Form des Objektes dem Fahrer angezeigt werden kann. Die Signalverarbeitungseinheit 5 ist weiter mit einer Warneinrichtung 9 verbunden, über die beispielsweise ein akustischer Warnton - gegebenenfalls abgestuft je nach Gefahrensituation - ausgegeben werden kann. Dieses Ausführungsbeispiel einer erfindungsgemäßen Objekterfassungsvorrichtung kann gleichermaßen als Komfortsystem, zum Beispiel Einparkhilfe-System, wie auch als Sicherheitssystem, wie zum Beispiel Unfallwarnungs- oder Stop-and-go-Überwachungssystem, eingesetzt werden. Die Genauigkeit von erfassten Objekten ist vergleichsweise groß und insbesondere auch in größeren Entfernungen sicher gewährleistet. Eine mögliche Funktionsbeeinträchtigung in der Objekterfassung ist auf ein Minimum reduziert aufgrund der zumindest teilweisen Redundanz von erfassten Daten durch die Entfernungssensoren 2, 3 und den im Wesentlichen den gleichen Bereich abdeckenden Kamerasensor 4. Das System ist kostengünstig, da eine geringe Anzahl von einzelnen Sensoren am Außenbereich des Fahrzeuges erforderlich ist.

In Fig. 2 ist in einer Rückansicht eines Kraftfahrzeugs 1 ein Ausführungsbeispiel für eine Anordnung für Sensoren einer erfindungsgemäßen Vorrichtung zur Erfassung von Objekten wiedergegeben. Der Heckbereich 7 des Kraftfahrzeugs 1, im vorliegenden Fall ein Pkw, was jedoch nicht als beschränkend anzusehen ist, weist an der Heckklappe 11 oberhalb eines Kraftfahrzeugs-Kennzeichens 12 einen kamerabasierten Sensor 4 auf. Weiter sind in dem Stoßfänger 10 des Kraftfahrzeugs 1 zwei Entfernungssensoren 2, 3 beabstandet zueinander eingebaut. Die Entfernungssensoren 2, 3 sind vorzugsweise Radarsensoren, wobei die Art ihres Einbaus und ihre Verbindung mit einer (nicht dargestellten) Signalverarbeitungseinheit im Kraftfahrzeug dem Fachmann des vorliegenden Gebietes hinlänglich bekannt sind. Aufgrund dieser quasi 3-Punkt-Anordnung der Sensoren 2, 3, 4 kann der Heckbereich des Kraftfahrzeugs vollständig auch in größeren Entfernungen auf Hindernisse oder dergleichen überwacht und dem Fahrer eine diesbezügliche vollständige Information, hinsichtlich der Entfernung ebenso wie hinsichtlich der Form eines Objektes, zur Verfügung gestellt werden.

Die vorliegende Erfindung ist selbstverständlich nicht auf die zuvor beschriebenen Ausführungsbeispiele beschränkt und kann insbesondere eine andere Anzahl von Entfernungssensoren 2, 3 und/oder eine andere Anzahl von kamerabasierten Sensoren 4 aufweisen. Außerdem kann die erfindungsgemäße Sensorik lediglich am Frontbereich eines Kraftfahrzeugs vorgesehen sein, zum Beispiel zur Überwachung auf Zusammenstöße in einem Sicherheitssystem beim Fahren des Kraftfahrzeugs. Alternativ kann eine Sensorik je im Heckbereich und im Frontbereich eines Kraftfahrzeugs vorgesehen sein mit einer gleichen oder unterschiedlichen Anzahl von jeweiligen Entfernungssensoren und Kamerasensoren. Die Vorrichtung gemäß der Erfindung kann auch als verbesserte Einparkhilfe in einem Kraftfahrzeug vorgesehen werden.

Sämtliche in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Vorrichtung zur Erfassung von Objekten im Umfeld eines Kraftfahrzeugs (1) mit mindestens einem Entfernungssensor (2, 3) zur Bestimmung von Entfernungen zwischen dem Kraftfahrzeug (1) und Objekten, **dadurch gekennzeichnet, dass** mindestens ein Kamerasensor (4) im Bereich des mindestens einen Entfernungssensors (2, 3) mit mindestens teilweise überlagertem Erfassungsbereich zu letzterem vorgesehen ist sowie eine Signalverarbeitungseinheit (5), mittels welcher eine kombinierte Signal- und Bildverarbeitung des Entfernungssensors (2, 3) und des Kamerasensors (4) zur Objekterfassung und Entfernungsbestimmung realisierbar ist.

2. Vorrichtung nach Anspruch 1, **dadurch gekennzeichnet, dass** der mindestens eine Entfernungssensor (2, 3) ein Radarsensor ist.

3. Vorrichtung nach Anspruch 1 oder 2, **dadurch gekennzeichnet, dass** der mindestens eine Kamerasensor (4) eine passive, zweidimensionale Kamera ist.

4. Vorrichtung nach einem der vorhergehenden Ansprüche, **dadurch gekennzeichnet, dass** zwei Entfernungssensoren (2, 3) und ein dazwischen mittig angeordneter Kamerasensor (4) mit überlagertem Erfassungsbereich vorgesehen sind.

5. Vorrichtung nach einem der vorhergehenden Ansprüche, **dadurch gekennzeichnet, dass** eine Sensorik bestehend aus einer Kombination von Entfernungssensoren (2, 3) und Kamerasensoren (4) im Frontbereich (6) und am Heck (7) des Kraftfahrzeugs (1) angeordnet ist.

6. Vorrichtung nach einem der vorhergehenden Ansprüche, **dadurch gekennzeichnet, dass** eine Anzeigeeinrichtung (8) vorgesehen ist, mittels welcher Entfernungsinformationen und Objektkonturen zweidimensional darstellbar sind.

7. Vorrichtung nach einem der Ansprüche 1 bis 5, **dadurch gekennzeichnet, dass** eine Anzeigeeinrichtung vorgesehen ist, mittels welcher erfasste Objekte dreidimensional darstellbar sind.

8. Vorrichtung nach einem der vorhergehenden Ansprüche, **dadurch gekennzeichnet, dass** die Signalverarbeitungseinheit (5) angepasst ist zur dreidimensionalen Bildverarbeitung und zu einer Redundanzüberprüfung von erfassten Sensorwerten des mindestens einen Entfernungssensors (2, 3) und des Kamerasensors (4).

9. Vorrichtung nach einem der vorhergehenden Ansprüche, **dadurch gekennzeichnet, dass** eine akustische und/oder grafische Warneinrichtung (9) vorgesehen ist.

10. Vorrichtung nach einem der vorhergehenden Ansprüche, **dadurch gekennzeichnet, dass** sie Teil eines Einparkhilfe-Systems des Kraftfahrzeugs (1) ist.

11. Vorrichtung nach einem der Ansprüche 1 bis 9, **dadurch gekennzeichnet, dass** sie Teil eines Sicherheits- und Unfallverhütungs-Systems des Kraftfahrzeugs (1) ist.
